# EUROPÄISCHE PATENTSCHRIFT

(11) **EP 3 634 124 B1**
(45) Veröffentlichungstag und Bekanntmachung des Hinweises auf die Patenterteilung: **17.11.2021**
(21) Anmeldenummer: 18728058.1
(22) Anmeldetag: 17.05.2018
(51) Int. Cl.: A01M 7/00

(54) **VERTEILERGESTÄNGE**
SPRAY BOOM
TRINGLERIE DE DISTRIBUTEUR

(30) Priorität: 07.06.2017 DE 102017112498; 30.06.2017 DE 102017114637
(43) Veröffentlichungstag der Anmeldung: 15.04.2020
(73) Patentinhaber: Amazonen-Werke H. Dreyer SE & Co. KG, 49205 Hasbergen (DE)
(72) Erfinder: BORCHERT, Anna-Gret, 49090 Osnabrück (DE); KLEMANN, Timo, 49191 Belm (DE); KÜHN, Christoph, 49186 Bad Iburg (DE)
(86) Internationale Anmeldenummer: PCT/EP2018/062838
(87) Internationale Veröffentlichungsnummer: WO 2018/224273

(56) Entgegenhaltungen:
- EP-A1- 1 346 637
- EP-A1- 2 227 949
- WO-A1-2016/144795
- DE-A1- 4 413 739
- DE-A1-102015 101 032

## Beschreibung

Die Erfindung betrifft eine Spritzeinrichtung für ein landwirtschaftliches Spritzgerät nach dem Oberbegriff des Patentanspruchs 1, und wie bekannt aus der EP 2 227 949 A1, und ein landwirtschaftliches Spritzgerät nach dem Oberbegriff des Patentanspruchs 18.

Landwirtschaftliche Spritzgeräte, wie beispielsweise Feldspritzen, werden eingesetzt, um Pflanzenschutzmittel oder Dünger auf Ackerböden oder Nutzpflanzenbestände auszubringen. Hierzu weisen Spritzeinrichtungen üblicherweise ein Verteilergestänge auf, an welchem mehrere Ausbringelemente zum Ausbringen einer Spritzflüssigkeit angeordnet sind. Das Verteilergestänge erstreckt sich üblicherweise quer zur Fahrtrichtung und kann erhebliche Breiten, von 50 m oder mehr, aufweisen.

Während des Ausbringens von Spritzflüssigkeit kann die Geschwindigkeit unterschiedlicher Gestängeabschnitte, beispielsweise aufgrund einer Kurvenfahrt, voneinander abweichen, sodass zur Erzielung einer gleichmäßigen Ausbringung der Spritzflüssigkeit die Ausbringcharakteristik der Spritzeinrichtung anzupassen ist. Die Druckschriften WO 2012/034754 A1 und EP 1 346 637 A1 beschreiben eine Möglichkeit, die Ausbringmenge der Ausbringelemente während einer Kurvenfahrt derart anzupassen, dass eine gleichmäßige Ausbringung der Spritzflüssigkeit erreicht wird.

Es hat sich jedoch gezeigt, dass die von dem Verteilergestänge ausgeführten Schwingungen ebenfalls zu einer erheblichen Beeinträchtigung des Ausbringergebnisses führen können. Die durch die Gestängeschwingungen verursachten Geschwindigkeitsunterschiede an den Ausbringelementen führen letztendlich zu einer ungleichmäßigen Ausbringung der Spritzflüssigkeit.

Zur Reduzierung der Gestängeschwingungen schlagen die Druckschriften DE 20 2013 011 983 U1 und EP 2 829 177 B1 vor, die Gestängeschwingungen mittels eines aktiven Dämpfungssystems zu reduzieren. Darüber hinaus ist aus den Druckschriften DE 10 2014 111 090 A1 und DE 10 2015 113 721 A1 eine Möglichkeit bekannt, die Schwingungen eines Verteilergestänges aktiv zu tilgen.

Trotz des Einsatzes von aktiven Dämpfungseinrichtungen oder aktiven Tilgungseinrichtungen zur Reduzierung der Gestängeschwingungen weisen die Ausbringelemente entsprechender Spritzeinrichtungen während des Betriebs weiterhin unterschiedliche Geschwindigkeiten auf, sodass weiterhin erhebliche Ungleichmäßigkeiten bei der Ausbringung der Spritzflüssigkeit erzeugt werden. Dies kann dadurch bedingt sein, dass die Dämpfung-/ Tilgungseinrichtung ein zu träges Ansprechverhalten aufweist oder aus sonstigen Gründen, insbesondere prinzipbedingt, nicht in der Lage ist, die Gestängeschwingungen in Gänze zu dämpfen und/oder zu tilgen.

Die der Erfindung zugrunde liegende Aufgabe besteht somit darin, die Gleichmäßigkeit bei der Ausbringung einer Spritzflüssigkeit mittels einer Spritzeinrichtung für ein landwirtschaftliches Spritzgerät weiter zu steigern.

Die Aufgabe wird gelöst durch eine Spritzeinrichtung der eingangs genannten Art, wobei die Spritzeinrichtung eine Ausbringmengensteuereinrichtung aufweist, welche dazu eingerichtet ist, die Ausbringmenge an Spritzflüssigkeit an mehreren, gruppierten oder sämtlichen Ausbringelementen unabhängig voneinander den Schwingungen des Verteilergestänges anzupassen. Hierdurch kann beispielsweise die Ausbringmenge an jedem Ausbringelement einzeln oder die Ausbringmenge an mehreren gruppierten Ausbringelementen, welche entlang einer Teilbreite des Verteilergestänges angeordnet sind, gemeinsam angepasst werden. Die unabhängige Anpassung der Ausbringmenge an Spritzflüssigkeit an jedem einzelnen Ausbringelement führt zu einer besonders gleichmäßigen Ausbringung der Spritzflüssigkeit. Wenn die Ausbringmenge mehrerer Gruppen von Ausbringelementen unabhängig voneinander den Schwingungen des Verteilergestänges anpassbar gestaltet wird, wird der Verschaltungs- und Steuerungsaufwand reduziert, wobei gleichzeitig eine hohe Gleichmäßigkeit bei der Ausbringung der Spritzflüssigkeit erreicht werden kann.

Die Erfindung macht sich die Erkenntnis zunutze, dass durch eine Kombination einer aktiven Schwingungsreduziereinrichtung mit einer Ausbringmengensteuereinrichtung die Gleichmäßigkeit bei der Ausbringung einer Spritzflüssigkeit erheblich gesteigert werden kann. Die nach der aktiven Schwingungsreduzierung durch die Schwingungsreduziereinrichtung weiterhin vorhandenen Gestängeschwingungen führen zu unterschiedlichen Geschwindigkeiten an den Ausbringelementen der Spritzeinrichtung. Diese unterschiedlichen Geschwindigkeiten werden durch die Anpassung der Ausbringmenge mittels der Ausbringmengensteuereinrichtung derart ausgeglichen, dass die Gleichmäßigkeit der ausgebrachten Spritzflüssigkeit gesteigert wird. Dies führt letztendlich zu einer Verbesserung des Ausbringergebnisses und somit zu gesteigerten Erträgen.

Wenn das Verteilergestänge beispielsweise während der Fahrt des landwirtschaftlichen Spritzgeräts nach hinten schwingt, nimmt die absolute Geschwindigkeit des Verteilergestänges von der Gestängemitte zu den Außenbereichen des Verteilergestänges ab. Demzufolge kommt es bei derartigen Schwingungen mit zunehmendem Abstand von der Gestängemitte zu einer zunehmenden Überdosierung an Spritzflüssigkeit. Wenn das Verteilergestänge beispielsweise während der Fahrt des landwirtschaftlichen Spritzgeräts nach vorne schwingt, nimmt die absolute Geschwindigkeit des Verteilergestänges von der Gestängemitte zu den Außenbereichen des Verteilergestänges zu. Demzufolge kommt bei es bei derartigen Schwingungen mit zunehmendem Abstand von der Gestängemitte zu einer zunehmenden Unterdosierung an Spritzflüssigkeit. Vorzugsweise erfolgt die Anpassung der Ausbringmenge an Spritzflüssigkeit einzelner, gruppierter oder sämtlicher Ausbringelemente an die Schwingungen des Verteilergestänges demnach durch die Anpassung der Ausbringmenge an Spritzflüssigkeit einzelner, gruppierter oder sämtlicher Ausbringelemente an die unterschiedlichen Geschwindigkeiten des Verteilergestänges oder die unterschiedlichen Geschwindigkeiten der Ausbringelemente. Durch die Anpassung der Ausbringmenge an Spritzflüssigkeit einzelner, gruppierter oder sämtlicher Ausbringelemente an die unterschiedlichen Geschwindigkeiten des Verteilergestänges oder die unterschiedlichen Geschwindigkeiten der Ausbringelemente können schwingungsbedingte Unterdosierungen und Überdosierungen an Spritzflüssigkeit effektiv ausgeglichen werden. Die Ausbringelemente einer Gruppe sind entlang eines Teilabschnitts des Verteilergestänges angeordnet. Das Verteilergestänge erstreckt sich vorzugsweise quer zur Fahrtrichtung des landwirtschaftlichen Spritzgeräts. Insbesondere umfasst das Verteilergestänge einen ersten Ausleger, welcher sich in eine erste laterale Richtung erstreckt, und einen zweiten Ausleger, welcher sich in eine entgegengesetzte zweite laterale Richtung erstreckt.

In einer besonders bevorzugten Ausführungsform der erfindungsgemäßen Spritzeinrichtung ist die aktive Schwingungsreduziereinrichtung dazu eingerichtet, elastische Schwingungen des Verteilergestänges und/oder Starrkörperschwingungen des Verteilergestänges aktiv zu reduzieren. Die Schwingungen des Verteilergestänges werden beispielsweise durch Bodenunebenheiten und das Fahrverhalten des landwirtschaftlichen Spritzgeräts verursacht. Ferner weist das Verteilergestänge eine ausgeprägte Elastizität auf, sodass neben Starrkörperschwingungen auch elastische Schwingungen im Verteilergestänge auftreten. Die elastischen Schwingungen des Verteilergestänges führen dabei zu einem "Zucken" des Verteilergestänges. Aufgrund der Gestängeaufhängung ist ein "starres Zucken" nicht möglich. Daher tritt diese Schwingungsform als elastische Schwingung auf. Die erste Eigenfrequenz liegt dabei üblicherweise zwischen 0,7 Hz und 1,0 Hz, die zweite Eigenfrequenz kann beispielsweise bei etwa 2,5 Hz liegen. Weitere Eigenfrequenzen liegen oberhalb von 3,5 Hz. Die Starrkörperschwingungen und/oder die elastischen Schwingungen des Verteilergestänges können ferner zu einem "Gieren" des Verteilergestänges führen. Das "starre Gieren" liegt in einem Frequenzbereich bis etwa 0,4 Hz und entsteht aufgrund der Gestängeaufhängung. Darüber hinaus kann auch elastisches Gieren mit einer ersten Eigenfrequenz von etwa 1,5 Hz bis 2,0 Hz auftreten. Weitere elastische Giereigenfrequenzen liegen oberhalb von 3 Hz. Während der Geradeausfahrt des landwirtschaftlichen Spritzgeräts stellt das Zucken üblicherweise die Hauptschwingungsform dar. Bei Kurvenfahrten oder Fahrten im Vorgewende kann jedoch auch das Gieren die Hauptschwingungsform darstellen.

In einer anderen bevorzugten Ausführungsform der erfindungsgemäßen Spritzeinrichtung ist die aktive Schwingungsreduziereinrichtung dazu eingerichtet, horizontale und/oder vertikale Gestängeschwingungen zu reduzieren. Vorzugsweise ist die aktive Schwingungsreduziereinrichtung dazu eingerichtet, die Amplitude und/oder die Frequenz der in Fahrtrichtung und entgegen der Fahrtrichtung ausgerichteten horizontalen Gestängeschwingungen zu reduzieren. Die horizontalen Gestängeschwingungen verursachen eine zusätzliche Relativbewegung der Ausbringelemente parallel zum Boden und beeinflussen somit die Ausbringung der Spritzflüssigkeit in erheblichem Maße. Da sich der Spritzkegel einiger Typen von Ausbringelementen mit dem Abstand von der Ausbringöffnung des jeweiligen Ausbringelements ändert, können auch vertikale Gestängeschwingungen Ungleichmäßigkeiten bei der Ausbringung der Spritzflüssigkeit verursachen. Mithin kann durch die aktive Reduzierung von vertikalen und/oder horizontalen Gestängeschwingungen das Ausbringergebnis erheblich verbessert werden. Vorzugsweise ist das Verteilergestänge mittels einer Pendelaufhängung aufgehangen, wobei mittels der Pendelaufhängung eine vertikale Führung des Verteilergestänges umgesetzt wird.

In einer Weiterbildung der erfindungsgemäßen Spritzeinrichtung ist die aktive Schwingungsreduziereinrichtung dazu eingerichtet, Schwingungen des Verteilergestänges aktiv zu dämpfen. Wenn die Schwingungsreduziereinrichtung dazu eingerichtet ist, die Schwingungen des Verteilergestänges aktiv zu dämpfen, kann die Schwingungsreduziereinrichtung eine oder mehrere aktive Dämpfungseinheiten umfassen, deren Dämpfercharakteristik an die jeweilige Betriebssituation anpassbar ist. Zur aktiven Dämpfung der Schwingungen des Verteilergestänges können unterschiedliche aktive Dämpfertypen eingesetzt werden. Beispielsweise ist der eine oder sind die mehreren aktiven Dämpfer als elektrorheologische Dämpfer ausgebildet. Alternativ oder zusätzlich kann die aktive Schwingungsreduziereinrichtung dazu eingerichtet sein, Schwingungen des Verteilergestänges aktiv zu tilgen. Anders als bei der Schwingungsdämpfung ermöglicht die Schwingungstilgung eine Reduzierung der Gestängeschwingungen, ohne dass dies eine Bewegung des Verteilergestänges erfordert. Alternativ oder zusätzlich kann die aktive Schwingungsreduziereinrichtung dazu eingerichtet sein, das Verteilergestänge aktiv von einem Erregerbauteil, welches das Verteilergestänge zu Schwingungen anregt, zu entkoppeln. Bei der aktiven Entkopplung können beispielsweise die Entkopplungseigenschaften einer Entkopplungseinrichtung zwischen dem Erregerbauteil und dem Verteilergestänge unter Energieaufwand aktiv angepasst werden.

Die Schwingungsreduziereinrichtung ist vorzugsweise zwischen der Gestängeaufhängung und dem Verteilergestänge angeordnet. Ferner kann die Schwingungsreduziereinrichtung teilweise oder vollständig in der Gestängeaufhängung und/oder dem Verteilergestänge integriert sein.

In einer anderen bevorzugten Ausführungsform der erfindungsgemäßen Spritzeinrichtung weist die aktive Schwingungsreduziereinrichtung einen oder mehrere Gegenerreger auf, welche dazu eingerichtet sind, das Verteilergestänge entgegen der Gestängeschwingungen zu erregen. Demnach setzt der eine oder setzen die mehreren Gegenerreger die aktive Schwingungstilgung der Gestängeschwingungen um. Vorzugsweise umfasst der eine oder umfassen die mehreren Gegenerreger einen oder mehrere Hydraulikzylinder, insbesondere Plungerzylinder. Vorzugsweise ist zumindest ein Hydraulikzylinder in Fahrtrichtung und zumindest ein Hydraulikzylinder entgegen der Fahrtrichtung ausgerichtet. Alternativ können statt zweier Plungerzylinder auch entweder ein Differentialzylinder oder ein Gleichgangzylinder mit jeweils zwei Zylinderkammern vorgesehen sein. Vorzugsweise erfolgt die Ansteuerung des einen oder der mehreren Gegenerreger über proportionale Druckregelventile.

Außerdem ist eine erfindungsgemäße Spritzeinrichtung bevorzugt, bei welcher die Ausbringmengensteuereinrichtung dazu eingerichtet ist, die Anpassung der Ausbringmenge an Spritzflüssigkeit der einzelnen, gruppierten oder sämtlichen Ausbringelemente durch eine Adaption des Durchflusses an Spritzflüssigkeit durch die einzelnen, gruppierten oder sämtlichen Ausbringelemente umzusetzen. Die Adaption der Durchflussmenge kann dabei sowohl das Einstellen einer konkreten Durchflussrate als auch das Unterbrechen und Freigeben des Durchflusses durch die Ausbringelemente umfassen. Die Adaption des Durchflusses an Spritzflüssigkeit durch die einzelnen, gruppierten oder sämtlichen Ausbringelemente kann beispielsweise mehrstufig oder stufenlos erfolgen.

In einer anderen bevorzugten Ausführungsform der erfindungsgemäßen Spritzeinrichtung ist die Ausbringmengensteuereinrichtung dazu eingerichtet, die Anpassung der Ausbringmenge an Spritzflüssigkeit der einzelnen, gruppierten oder sämtlichen Ausbringelemente durch eine Verstellung des Durchflussquerschnitts der einzelnen, gruppierten oder sämtlichen Ausbringelemente umzusetzen. Die Verstellung des Durchflussquerschnitts kann beispielsweise über eine verstellbare Blende erfolgen. Beispielsweise kann über eine verstellbare Blende der Durchmesser einer runden Durchflussöffnung verstellt werden. Alternativ kann die Form einer Durchflussöffnung durch teilweises oder vollständiges Verdecken der Durchflussöffnung durch die Blende verändert werden. Wenn die Ausbringelemente als Spritzdüsen ausgebildet sind, kann die Verstellung des Durchflussquerschnitts über eine Verstellung des Düsenquerschnitts realisiert werden. Zusätzlich zu Spritzdüsen, bei welchen der Düsenquerschnitt verstellbar ist, kann vor jeder Spritzdüse oder vor jeder Teilbreite, entlang welcher mehrere Spritzdüsen angeordnet sind, eine verstellbare Blende angeordnet sein.

Bevorzugt ist außerdem eine erfindungsgemäße Spritzeinrichtung, bei welcher die Ausbringmengensteuereinrichtung dazu eingerichtet ist, die Anpassung der Ausbringmenge an Spritzflüssigkeit der einzelnen, gruppierten oder sämtlichen Ausbringelemente durch ein Modulationsverfahren, insbesondere durch eine Pulsweitenfrequenzmodulation, an den einzelnen, gruppierten oder sämtlichen Ausbringelementen umzusetzen. Mittels des Modulationsverfahrens kann beispielsweise ein hochfrequentes Schließen und Öffnen der einzelnen, gruppierten oder sämtlichen Ausbringelemente umgesetzt werden. Beispielsweise kann das Modulationsverfahren durch ein Modulieren eines Steuerstroms oder einer Steuerspannung, über welche der Zustand der Ausbringelemente veränderbar ist, erfolgen. Das Modulationsverfahren kann beispielsweise eine Pulsweitenmodulation, eine Frequenzmodulation oder eine Pulsweitenfrequenzmodulation sein. Bei der Pulsweitenfrequenzmodulation werden die Pulsweitenmodulation und die Frequenzmodulation miteinander kombiniert. Anders als bei der reinen Pulsweitenmodulation kann hierbei zusätzlich zu der Pulsweite auch die Pulsfrequenz verändert werden. Vorzugsweise setzt sich die Zyklusdauer eines Schaltzyklus eines Ausbringelements aus einer ersten Zeitdauer, während welcher das Ausbringelement geöffnet ist, und einer zweiten Zeitdauer, welche direkt auf die erste Zeitdauer folgt oder direkt vor der ersten Zeitdauer liegt und während welcher das Ausbringelement geschlossen ist, zusammen. Bei der Pulsweitenfrequenzmodulation sind die erste Zeitdauer und/oder die zweite Zeitdauer veränderbar, sodass auch die Zyklusdauer eines Schaltzyklus und dadurch die Pulsfrequenz veränderbar sind. Durch die Kombination der Veränderung von Pulsweite und Pulsfrequenz ist die Spritzeinrichtung beispielsweise in der Lage, an den einzelnen, gruppierten oder sämtlichen Ausbringelementen die Ausbringmenge an Spritzflüssigkeit nahezu stufenlos zu variieren. Der Spritzdruck und/oder die Tröpfchengröße bleiben bei der Pulsweitenfrequenzmodulation vorzugsweise im Wesentlichen konstant. Zudem führt die hohe Tropfengeschwindigkeit zu einer kurzen Tropfenflugzeit. Dies führt zu einer zielsicheren Applikation und gleichzeitig zu einer starken Abdriftminderung.

Vorteilhaft ist ferner eine erfindungsgemäße Spritzeinrichtung, bei welcher die Ausbringmengensteuereinrichtung dazu eingerichtet ist, die Anpassung der Ausbringmenge an Spritzflüssigkeit der einzelnen, gruppierten oder sämtlichen Ausbringelemente durch eine Pulsweitenmodulation an den einzelnen, gruppierten oder sämtlichen Ausbringelementen umzusetzen. Mittels der Pulsweitenmodulation kann ein hochfrequentes Schließen und Öffnen der einzelnen, gruppierten oder sämtlichen Ausbringelemente umgesetzt werden. Ferner kann mittels der Pulsweitenmodulation auch eine mehrstufige Anpassung der Ausbringmenge an Spritzflüssigkeit der einzelnen, gruppierten oder sämtlichen Ausbringelemente umgesetzt werden. Beispielsweise kann die Pulsweitenmodulation durch ein Pulsen eines Steuerstroms oder einer Steuerspannung, über welche der Zustand der Ausbringelemente veränderbar ist, erfolgen.

In einer weiteren bevorzugten Ausführungsform umfasst die erfindungsgemäße Spritzeinrichtung eine Erfassungseinrichtung, welche dazu eingerichtet ist, Schwingungen des Verteilergestänges zu erfassen und/oder zu ermitteln. Die Erfassungseinrichtung ist vorzugsweise dazu eingerichtet, horizontale und/oder vertikale Schwingungen des Verteilergestänges zu erfassen und/oder zu ermitteln. Vorzugsweise ist die Erfassungseinrichtung dazu eingerichtet, die Amplitude und/oder die Frequenz der in Fahrtrichtung und entgegen der Fahrtrichtung ausgerichteten horizontalen Gestängeschwingungen zu erfassen und/oder zu ermitteln. Ferner ist die Erfassungseinrichtung vorzugsweise dazu eingerichtet, elastische Schwingungen und/oder Starrkörperschwingungen des Verteilergestänges zu erfassen und/oder zu ermitteln. Insbesondere umfasst die Erfassungseinrichtung einen Wegsensor, welcher an der Gestängeaufhängung angeordnet und dazu eingesetzt wird, den Hub der Gegenerreger bei der aktiven Schwingungstilgung zu begrenzen.

In einer weiteren bevorzugten Ausführungsform der erfindungsgemäßen Spritzeinrichtung ist die Erfassungseinrichtung dazu eingerichtet, der Schwingungsreduziereinrichtung und/oder der Ausbringmengensteuereinrichtung Informationen zu den erfassten Schwingungen des Verteilergestänges zur Verfügung zu stellen. Durch die Bereitstellung von Informationen zu den erfassten Schwingungen des Verteilergestänges für die Schwingungsreduziereinrichtung und/oder die Ausbringmengensteuereinrichtung kann eine Ist-Wert-Ermittlung des Schwingungszustands erfolgen. Die Erfassungseinrichtung ist beispielsweise dazu eingerichtet, die Geschwindigkeit an mehreren Positionen des Verteilergestänges oder an einzelnen, gruppierten oder sämtlichen Ausbringelementen zu erfassen. Ferner ist die Erfassungseinrichtung dazu eingerichtet, die Fahrgeschwindigkeit der Spritzeinrichtung oder die Fahrgeschwindigkeit des landwirtschaftlichen Spritzgeräts zu erfassen und/oder zu ermitteln. Über einen Vergleich der Geschwindigkeiten an der einen oder den mehreren Positionen des Verteilergestänges oder den Ausbringelementen mit der Fahrtgeschwindigkeit der Spritzeinrichtung oder des landwirtschaftlichen Spritzgeräts kann die Gestängeschwingung an den entsprechenden Positionen hergeleitet werden. Die erfassten Gestängeschwingungen können auch aufgezeichnet werden, sodass anhand aufgezeichneter Schwingungen zu erwartende Gestängeschwingungen prädiktiv ermittelt werden können. Auf diese Weise kann eine besonders effektive Schwingungsreduzierung und Ausbringmengensteuerung umgesetzt werden.

In einer weiteren bevorzugten Ausführungsform der erfindungsgemäßen Spritzeinrichtung ist die Erfassungseinrichtung zum Ermitteln von Schwingungen des Verteilergestänges dazu eingerichtet, einen Gestängeschwingungen verursachenden Zustand der Spritzeinrichtung und/oder des landwirtschaftlichen Spritzgeräts zu erfassen und/oder auszuwerten. Dabei können beispielsweise Bewegungen oder Schwingungen an Bauteilen der Spritzeinrichtung und/oder des landwirtschaftlichen Spritzgeräts ermittelt und zur Reduzierung der Gestängeschwingungen und/oder zur Steuerung der Ausbringmenge der Ausbringelemente verwendet werden. Ferner kann der Beschleunigungszustand der Spritzeinrichtung und/oder des landwirtschaftlichen Spritzgeräts und/oder die Auslenkung und/oder die Kräfte an den Rädern oder den Radaufhängungen des landwirtschaftlichen Spritzgeräts erfasst werden, um aus diesen Daten die zu erwartenden Gestängeschwingungen ableiten zu können.

In einer Weiterbildung der erfindungsgemäßen Spritzeinrichtung weist die Erfassungseinrichtung zumindest zwei Sensoren auf, welche beabstandet voneinander an dem Verteilergestänge angeordnet und dazu eingerichtet sind, Gestängebewegungen zu erfassen und/oder zu ermitteln. Dabei können die Sensoren beispielsweise die Gestängeposition, die Gestängegeschwindigkeit und/oder die Gestängebeschleunigung erfassen und/oder ermitteln. Vorzugsweise ist jeweils zumindest ein oder nur ein Sensor an den zwei lateralen Auslegern des Verteilergestänges angeordnet.

In einer weiteren Ausführungsform der erfindungsgemäßen Spritzeinrichtung umfasst das Verteilergestänge zwei laterale Ausleger, welche sich im Betrieb der Spritzeinrichtung in entgegengesetzte Richtungen erstrecken, wobei an jedem Ausleger des Verteilergestänges mehrere Sensoren angeordnet sind, welche beabstandet voneinander angeordnet und dazu eingerichtet sind, Gestängebewegungen zu erfassen und/oder zu ermitteln. Mit einer steigenden Anzahl von Sensoren kann der Schwingungszustand des Verteilergestänges zunehmend präzise bestimmt werden. Je präziser die Gestängeschwingungen erfasst werden, desto effektiver lassen sich die Schwingungen des Verteilergestänges reduzieren und desto präziser kann die Ausbringmenge an den Ausbringelementen eingestellt werden.

In einer Weiterbildung der erfindungsgemäßen Spritzeinrichtung weist die Erfassungseinrichtung eine Anzahl von Sensoren auf, wobei die Anzahl und die Anordnung der Sensoren an dem Verteilergestänge die Ermittlung zumindest der horizontalen und durch Gestängeschwingungen verursachten Auslenkung und/oder Geschwindigkeit der an dem Verteilergestänge angeordneten Ausbringelemente erlauben. Grundsätzlich kann die Anzahl der Sensoren die Anzahl der an dem Verteilergestänge angeordneten Ausbringelemente unterschreiten, überschreiten oder mit der Anzahl der Ausbringelemente übereinstimmen. Unter Berücksichtigung der Schwingungseigenschaften des Verteilergestänges kann bereits mit einer geringen Anzahl von Sensoren, welche an geeigneten Positionen des Verteilergestänges angeordnet sind, das Schwingungsverhalten im Bereich der Ausbringelemente abgeleitet werden.

In einer anderen Ausführungsform der erfindungsgemäßen Spritzeinrichtung umfasst die Erfassungseinrichtung mehrere Sensoren, welche dazu eingerichtet sind, Gestängebewegungen zu erfassen und/oder zu ermitteln, wobei im Bereich eines jeden Ausbringelements oder an jedem Ausbringelement ein Sensor angeordnet ist. Dadurch, dass die Gestängebewegungen im Bereich der Ausbringelemente oder die Bewegungen der Ausbringelemente bekannt sind, kann eine besonders präzise Anpassung der Ausbringmenge an den einzelnen Ausbringelementen erfolgen. Vorzugsweise sind jeweils ein Sensor und ein Ausbringelement Bestandteil einer intelligenten Funktionseinheit, bei welcher die Ausbringmenge an dem Ausbringelement abhängig von den erfassten Daten des Sensors gesteuert wird.

In einer bevorzugten Ausführungsform der erfindungsgemäßen Spritzeinrichtung sind die Sensoren als Beschleunigungssensoren ausgebildet und dazu eingerichtet, die Gestängebeschleunigung und/oder die Beschleunigung der Ausbringelemente zu erfassen. Vorzugsweise sind die Beschleunigungssensoren dazu eingerichtet, die Gestängebeschleunigung und/oder die Beschleunigung der Ausbringelemente in horizontaler und/oder vertikaler Richtung zu erfassen. Alternativ kann der eine oder können die mehreren Sensoren auch als Geschwindigkeitssensoren, Wegsensoren oder Radarsensoren ausgebildet sein. Außerdem kann der eine oder können die mehreren Sensoren auch als Dehnungsmessstreifen oder Kamera ausgebildet sein.

Darüber hinaus ist eine erfindungsgemäße Spritzeinrichtung bevorzugt, bei welcher die Erfassungseinrichtung dazu eingerichtet ist, eine Kurvenfahrt zu erfassen, und die Ausbringmengensteuereinrichtung dazu eingerichtet ist, die Ausbringmenge an Spritzflüssigkeit einzelner, gruppierter oder sämtlicher Ausbringelemente der erfassten Kurvenfahrt anzupassen. Bei Kurvenfahrten kommt es aufgrund der unterschiedlichen Kurvenradien, auf denen sich die Ausbringelemente bewegen, zu unterschiedlichen Geschwindigkeiten an den Ausbringelementen. Um auch in diesem Fall eine Über- und Unterdosierung der ausgebrachten Spritzflüssigkeit kompensieren zu können, ist zum einen die Anpassung der Ausbringmenge an Spritzflüssigkeit an die unterschiedlichen Kurvenradien der Ausbringelemente notwendig und zum anderen die Anpassung der Ausbringmenge an Spritzflüssigkeit an die zusätzlich auftretenden Gestängeschwingungen. Wird sowohl die Kurvenfahrt als auch der Schwingungszustand des Verteilergestänges bei der Anpassung der Ausbringmenge an Spritzflüssigkeit berücksichtigt, kann eine äußerst gleichmäßige Ausbringung an Spritzflüssigkeit auch während Kurvenfahrten erfolgen. Die Kurvenfahrt kann hierbei durch verschiedenste Sensoren oder Sensorkombinationen, wie Drehratensensor und/oder Lenkwinkelsensor und/oder Geschwindigkeitssensor und/oder GPS-Sensor und/oder Beschleunigungssensor ermittelt werden. Die Sensoren können sich an dem Grundgerät, einer Zugmaschine und/oder dem Gestänge befinden.

Die der Erfindung zugrunde liegende Aufgabe wird ferner durch ein landwirtschaftliches Spritzgerät der eingangs genannten Art gelöst, wobei die Spritzeinrichtung nach einer der vorstehend beschriebenen Ausführungsformen ausgebildet ist. Hinsichtlich der Vorteile und Modifikationen des erfindungsgemäßen landwirtschaftlichen Spritzgeräts wird auf die Vorteile und Modifikationen der erfindungsgemäßen Spritzeinrichtung verwiesen.

Weitere Einzelheiten der Erfindung sind der Figurenbeschreibung und den Zeichnungen zu entnehmen. Es zeigen
- Fig. 1: ein Ausführungsbeispiel eines erfindungsgemäßen landwirtschaftlichen Spritzgeräts in einer Rückansicht;
- Fig. 2: das in der Fig. 1 dargestellte landwirtschaftliche Spritzgerät in einer Draufsicht;
- Fig. 3a: einen Ausbringvorgang ohne Schwingungsreduzierung und ohne Ausbringmengensteuerung;
- Fig. 3b: einen Ausbringvorgang mit Schwingungsreduzierung und mit Ausbringmengensteuerung;
- Fig. 4: die Gestängeaufhängung einer erfindungsgemäßen Spritzeinrichtung; und
- Fig. 5: ein Ausbringelement einer erfindungsgemäßen Spritzeinrichtung während des Anpassens der Ausbringmenge an Spritzflüssigkeit.

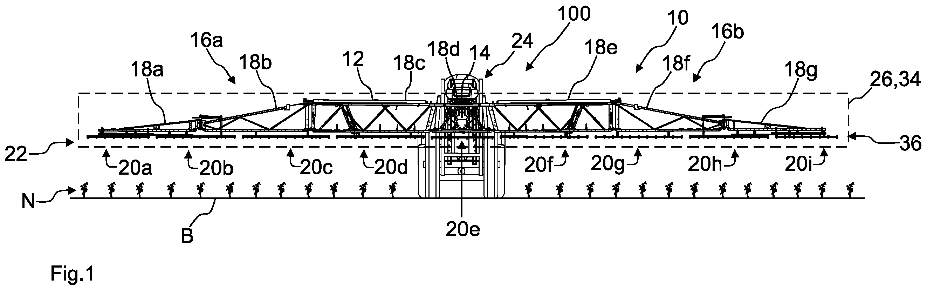

Die Fig. 1 zeigt ein als Feldspritze ausgebildetes landwirtschaftliches Spritzgerät 100. Das landwirtschaftliche Spritzgerät 100 weist eine Spritzeinrichtung 10 mit einem Verteilergestänge 12 auf. Das Verteilergestänge 12 ist mittels einer Gestängeaufhängung 14 mit einem Aufhängungsrahmen verbunden, wobei die Gestängeaufhängung 14 eine geringe Relativbewegung zwischen dem Verteilergestänge 12 und dem Aufhängungsrahmen zulässt. Ferner umfasst das Verteilergestänge 12 zwei laterale Ausleger 16a, 16b, welche sich im Betrieb der Spritzeinrichtung 10 in entgegengesetzte Richtungen erstrecken.

Der erste Ausleger 16a umfasst insgesamt drei zueinander verschwenkbare Gestängesegmente 18a-18c. Der zweite Ausleger 16b umfasst insgesamt drei zueinander verschwenkbare Gestängesegmente 18e-18g. Das innenliegende Gestängesegment 18c des ersten Auslegers 16a und das innenliegende Gestängesegment 18e des zweiten Auslegers 16b sind jeweils schwenkbar mit dem zentralen Gestängesegment 18d des Verteilergestänges 12 verbunden. Die Gestängesegmente 18a - 18g sind derart verschwenkbar ausgebildet, dass das Verteilgestänge 12 sich in eine nicht dargestellte eingeklappte Transportposition von maximal 3 m Breite und eine ausgeklappte Arbeitsposition von bis zu 50 m und mehr bringen lässt.

An dem Verteilergestänge 12 sind mehrere als Spritzdüsen ausgebildete Ausbringelemente 22 zum Ausbringen einer Spritzflüssigkeit angeordnet, wobei die Ausbringelemente 22 jeweils einer Gruppe 20a-20i von Ausbringelementen 22 zugeordnet sind. Die Ausbringelemente 22 einer Gruppe 20a-20i von Ausbringelementen 22 erstrecken sich über eine Teilbreite des Verteilergestänges 12, wobei eine Gruppe 20a-20i beispielsweise zwischen 5 und 15 Ausbringelemente 22 umfasst.

Die Spritzeinrichtung 10 weist außerdem eine aktive Schwingungsreduziereinrichtung 24 auf, welche dazu eingerichtet ist, horizontale und vertikale elastische Schwingungen des Verteilergestänges 12 und horizontale und vertikale Starrkörperschwingungen des Verteilergestänges 12 aktiv zu reduzieren.

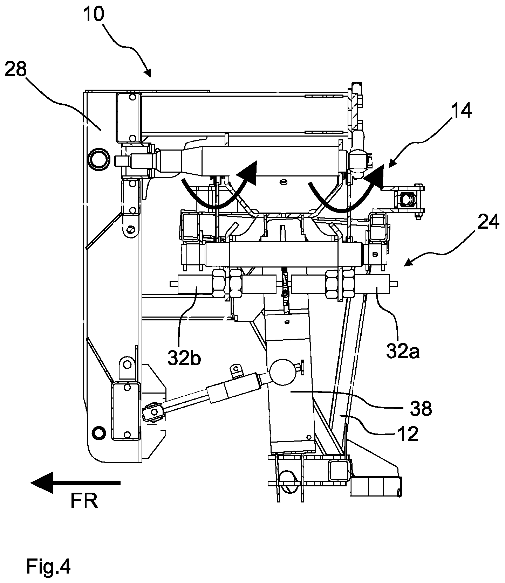

Die aktive Schwingungsreduziereinrichtung 24 ist außerdem dazu eingerichtet, die aktive Schwingungsreduzierung über eine aktive Tilgung der Schwingungen des Verteilergestänges 12 umzusetzen. Hierzu weist die Schwingungsreduziereinrichtung 24 mehrere Gegenerreger (vgl. Fig. 4) auf, welche dazu eingerichtet sind, das Verteilergestänge 12 entgegen der Gestängeschwingungen zu erregen.

Außerdem umfasst die Spritzeinrichtung 10 eine Ausbringmengensteuereinrichtung 26, welche dazu eingerichtet ist, die Ausbringmenge an Spritzflüssigkeit der Ausbringelemente 22 unabhängig voneinander an die Schwingungen des Verteilergestänges 12 anzupassen. Die Anpassung der Ausbringmenge an Spritzflüssigkeit der Ausbringelemente 22 an die Schwingungen des Verteilergestänges 12 erfolgt durch die Anpassung der Ausbringmenge an Spritzflüssigkeit der Ausbringelemente 22 an die Geschwindigkeit des jeweiligen Ausbringelements 22 oder des Gestängeabschnitts des Verteilergestänges 12, an welchem das jeweilige Ausbringelement 22 angeordnet ist.

Darüber hinaus umfasst die Spritzeinrichtung 10 eine Erfassungseinrichtung 34, welche dazu eingerichtet ist, Schwingungen des Verteilergestänges 12 zu erfassen. Dabei kann die Erfassungseinrichtung 34 horizontale und vertikale elastische Schwingungen sowie horizontale und vertikale Starrkörperschwingungen des Verteilergestänges 12 erfassen. Die Erfassungseinrichtung 34 umfasst mehrere als Beschleunigungssensoren ausgebildete Sensoren 36, welche dazu eingerichtet sind, die Gestängebeschleunigung in Fahrtrichtung, entgegen der Fahrtrichtung und in vertikaler Richtung zu erfassen. Dabei ist an jedem Ausbringelement 22 oder im Bereich jeden Ausbringelements 22 je ein Sensor 36 angeordnet, wobei jeweils ein Sensor 36 und ein Ausbringelement 22 Bestandteil einer intelligenten Funktionseinheit sind, bei welcher die Ausbringmenge an dem Ausbringelement 22 abhängig von den erfassten Beschleunigungsdaten des Sensors 36 gesteuert wird.

Ferner ist die Erfassungseinrichtung 34 über die Sensoren 36 dazu eingerichtet, eine Kurvenfahrt zu erfassen, wobei die Ausbringmengensteuereinrichtung 26 dazu eingerichtet ist, die Ausbringmenge an Spritzflüssigkeit der Ausbringelemente 22 an die erfasste Kurve anzupassen. Während der Kurvenfahrt erfolgt dabei eine Anpassung der Ausbringmenge an Spritzflüssigkeit der Ausbringelemente 22 an die Kurvenfahrt und an die erfassten Gestängeschwingungen.

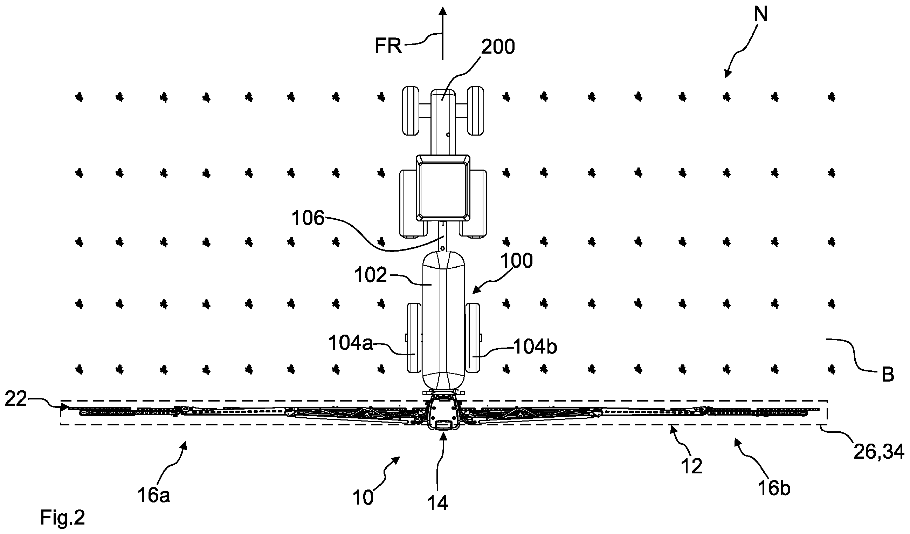

Die Fig. 2 zeigt, dass das landwirtschaftliche Spritzgerät 100 von einer Zugmaschine 200 über einen Nutzpflanzenbestand N auf dem Boden B gezogen wird. Das landwirtschaftliche Spritzgerät 100 umfasst einen Vorratstank 102 zur Bevorratung der auszubringenden Spritzflüssigkeit. Der Vorratstank 102 ist zum Verspritzen der Spritzflüssigkeit mit der Spritzeinrichtung 10 verbunden.

Seitlich des Vorratstanks 102 ist jeweils ein Rad 104a, 104b angeordnet. Der Vorratstank 102 wird von einem Tragrahmen des landwirtschaftlichen Spritzgeräts 100 getragen, wobei der Tragrahmen des landwirtschaftlichen Spritzgeräts 100 in einem vorderen Bereich mit einer Zugdeichsel 106 verbunden ist, über welche die Kupplung mit der Zugmaschine 200 umgesetzt wird. In einem hinteren Bereich ist der Tragrahmen des landwirtschaftlichen Spritzgeräts 100 mit der Gestängeaufhängung 14 für das Verteilergestänge 12 verbunden. Das Verteilergestänge 12 erstreckt sich quer zur Fahrtrichtung FR des landwirtschaftlichen Spritzgeräts 100.

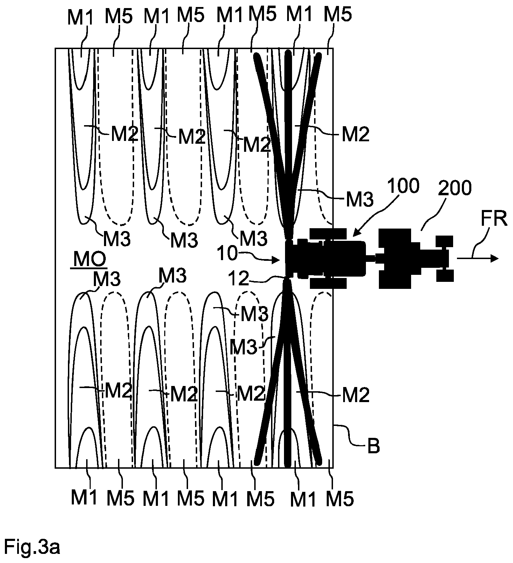

Die Fig. 3a zeigt eine Spritzeinrichtung 10 während des Ausführens eines Ausbringvorgangs. Dabei befindet sich die Spritzeinrichtung 10 in einem Zustand, in welchem weder eine aktive Reduzierung der Schwingungen des Verteilergestänges 12 noch eine Anpassung der Ausbringmenge an Spritzflüssigkeit der an dem Verteilergestänge angeordneten Ausbringelemente erfolgt.

Beispielsweise umfasst die Spritzeinrichtung 10 weder eine aktive Schwingungsreduziereinrichtung noch eine Ausbringmengensteuereinrichtung oder die aktive Schwingungsreduziereinrichtung und die Ausbringmengensteuereinrichtung sind deaktiviert.

Aufgrund der mangelnden aktiven Schwingungsreduzierung und der mangelnden Anpassung der Ausbringmenge an Spritzflüssigkeit der Ausbringelemente an die Schwingungen des Verteilergestänges 12 ergeben bei der Ausbringung der Spritzflüssigkeit auf dem Boden B erhebliche Ungleichmäßigkeiten. In den Randbereichen übersteigt die ausgebrachte Menge M1 an Spritzflüssigkeit die beabsichtige Ausbringmenge M0 erheblich. Die Randbereiche, in welchen die ausgebrachte Menge M1 an Spritzflüssigkeit die beabsichtige Ausbringmenge M0 erheblich übersteigt, werden von einem weiteren Bereich umgeben, in welchem die ausgebrachte Menge M2 an Spritzflüssigkeit die beabsichtige Ausbringmenge M0 an Spritzflüssigkeit noch deutlich, jedoch in geringerem Maße als die ausgebrachte Menge M1 an Spritzflüssigkeit, übersteigt. Die Bereiche, in welchen die ausgebrachte Menge M2 an Spritzflüssigkeit die beabsichtige Ausbringmenge M0 deutlich übersteigt, werden von einem weiteren Bereich umgeben, in welchem die ausgebrachte Menge M3 an Spritzflüssigkeit die beabsichtige Ausbringmenge M0 weiterhin ertragsreduzierend, jedoch in geringerem Maße als die ausgebrachte Menge M2 an Spritzflüssigkeit, übersteigt.

In entsprechender Weise ergeben sich Bereiche M5 in welchem die beabsichtigte Ausbringmenge M0 unterschritten wird, wobei lokale Abweichungen innerhalb des Randbereiches M5 möglich sind. So können die Ausbringmengen insbesondere im äußeren Randbereich weiter von der gewünschten Ausbringmenge abweichen als in der Nähe des Zentrums. Der Grund für die auftretenden Abweichungen ist eine zu große Aufenthaltsdauer des Gestänges in den Bereichen M1 - M3, was zu einer zu großen Ausbringmenge in diesen Bereichen führt und eine zu niedrige Aufenthaltsdauer im Bereich M5, was zu einer zu niedrigen Ausbringmenge in diesem Bereich im Vergleich zur gewünschten Ausbringmenge M0 führt.

Die Ungleichmäßigkeiten in der Spritzmittelverteilung führen zu erheblichen Ertragsverlusten und sind somit unbedingt zu vermeiden.

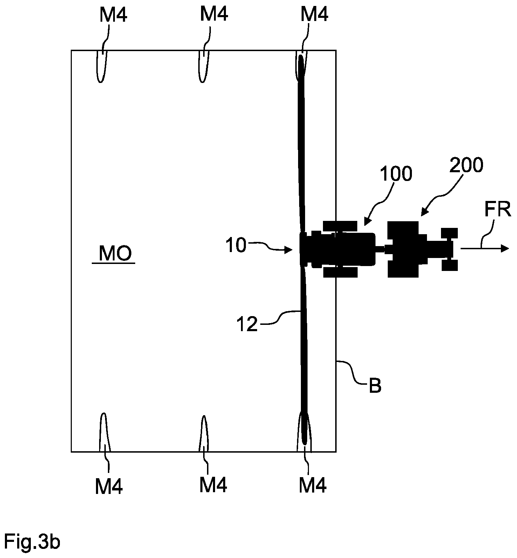

Die Fig. 3b zeigt eine Spritzeinrichtung 10 während des Ausführens eines Ausbringvorgangs. Dabei erfolgt sowohl eine aktive Reduzierung der Schwingungen des Verteilergestänges 12 als auch eine Anpassung der Ausbringmenge an Spritzflüssigkeit der an dem Verteilergestänge angeordneten Ausbringelemente.

Die Spritzeinrichtung 10 setzt zur aktiven Reduzierung der Schwingungen des Verteilergestänges 12 und zur Anpassung der Ausbringmenge an Spritzflüssigkeit der an dem Verteilergestänge angeordneten Ausbringelemente eine Erfassungseinrichtung ein, welche dazu eingerichtet ist, einer Schwingungsreduziereinrichtung und einer Ausbringmengensteuereinrichtung Informationen zu den erfassten Schwingungen des Verteilergestänges 12 zur Verfügung zu stellen. Beispielsweise kann die Spritzeinrichtung 10 entsprechend der in den Fig. 1 und 2 dargestellten Spritzeinrichtung 10 ausgebildet sein.

Durch die Bereitstellung von Informationen zu den erfassten Schwingungen des Verteilergestänges 12 für die Schwingungsreduziereinrichtung und die Ausbringmengensteuereinrichtung kann eine Ist-Wert-Ermittlung des Schwingungszustandes erfolgen. Auf Grundlage des Schwingungszustands können die Schwingungen des Verteilergestänges 12 dann effektiv aktiv reduziert werden und es kann eine präzise Anpassung der Ausbringmenge an Spritzflüssigkeit der Ausbringelemente erfolgen.

Durch die aktive Reduzierung der Schwingungen des Verteilergestänges 12 sowie die Anpassung der Ausbringmenge an Spritzflüssigkeit der Ausbringelemente übersteigt die in den Randbereichen ausgebrachte Menge M4 an Spritzflüssigkeit die beabsichtige Ausbringmenge M0 lediglich geringfügig, sodass kein wesentlicher Ertragsverlust durch die lokale Über- oder Unterdosierung der Spritzflüssigkeit eintritt. In den übrigen Bereichen des Bodens B entspricht die ausgebrachte Menge M0 an Spritzflüssigkeit der beabsichtigten Ausbringmenge.

Die Fig. 4 zeigt eine als Pendelaufhängung ausgebildete Gestängeaufhängung 14 einer Spritzeinrichtung 10. Das Verteilergestänge 12 ist über einen Zwischenrahmen 38 mittels der Gestängeaufhängung 14 mit einem Aufhängungsrahmen 28 verbunden. Durch die als Pendelaufhängung ausgeführte Gestängeaufhängung 14 wird eine vertikale Führung des Verteilergestänges 12 umgesetzt.

Die aktive Schwingungsreduziereinrichtung 24 weist zwei Gegenerreger 32a, 32b auf, welche dazu eingerichtet sind, das Verteilergestänge 12 entgegen der Gestängeschwingungen zu erregen. Die Gegenerreger 32a, 32b sind jeweils als Hydraulikzylinder, nämlich als Plungerzylinder, ausgebildet, wobei der Gegenerreger 32a in Fahrtrichtung FR und der Gegenerreger 32b entgegen der Fahrtrichtung FR ausgerichtet ist. Die Ansteuerung der Gegenerreger 32a, 32b erfolgt beispielsweise über proportionale Druckregelventile.

Die Erfassungseinrichtung der dargestellten Spritzeinrichtung 10 kann außerdem einen Wegsensor aufweisen, welcher an der Gestängeaufhängung 14 angeordnet und dazu eingesetzt wird, den Hub der Gegenerreger 32a, 32b bei der aktiven Schwingungstilgung zu begrenzen.

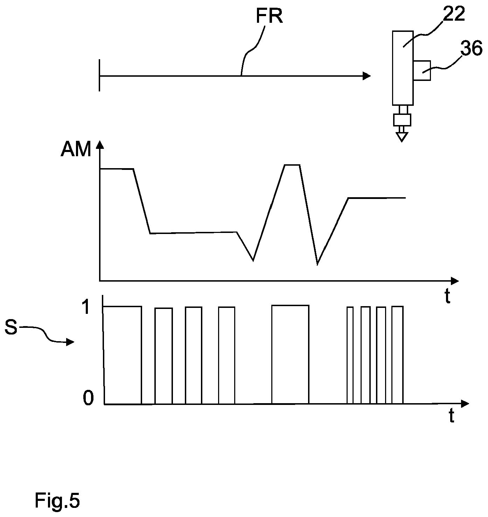

Die Fig.5 zeigt ein als Spritzdüse ausgebildetes Ausbringelement 22, welcher in Fahrtrichtung FR bewegt wurde. Beispielsweise können einzelne oder sämtliche der Ausbringelemente 22 der in den Fig. 1 und 2 dargestellten Spritzeinrichtung 10 entsprechend dieses Ausbringelements 22 ausgebildet sein.

An dem Ausbringelement 22 ist ein als Beschleunigungssensor ausgebildeter Sensor 36 angeordnet. Eine Ausbringmengensteuereinrichtung ist dazu eingerichtet, die Anpassung der Ausbringmenge AM an Spritzflüssigkeit des Ausbringelements 22 durch eine Adaption des Durchflusses an Spritzflüssigkeit durch das Ausbringelement 22 umzusetzen. Konkret wird die Anpassung der Ausbringmenge AM an Spritzflüssigkeit des Ausbringelements 22 durch eine Pulsweitenmodulation an dem Ausbringelement 22 umgesetzt. Die Pulsweitenmodulation erlaubt ein hochfrequentes Schließen und Öffnen des Ausbringelements 22. Dargestellt ist außerdem der Schaltzustand S des Ausbringelements 22 über die Zeit t. Durch die Pulsweitenmodulation schaltet das Ausbringelement 22 mehrmals zwischen dem geöffneten Zustand 1 und dem geschlossenen Zustand 0 um. Abhängig davon, wie lange das Ausbringelement 22 geöffnet und geschlossen ist, stellt sich eine entsprechende Ausbringmenge AM ein.

Bei der dargestellten Pulsweitenmodulation handelt es sich um eine Pulsweitenfrequenzmodulation. Neben der Pulsweite wird hierbei auch die Pulsfrequenz verändert. Die Zyklusdauer eines Schaltzyklus des Ausbringelements 22 setzt sich aus einer ersten Zeitdauer, während welcher das Ausbringelement 22 geöffnet und der Schaltzustand "1" eingestellt ist, und einer zweiten Zeitdauer, welche direkt auf die erste Zeitdauer folgt und während welcher das Ausbringelement 22 geschlossen und der Schaltzustand "0" eingestellt ist, zusammen. Dargestellt ist, dass die erste Zeitdauer, während welcher das Ausbringelement 22 geöffnet ist, und die zweite Zeitdauer, während welcher das Ausbringelement 22 geschlossen ist, variieren, sodass eine präzise Anpassung der Ausringmenge erfolgen kann.

Alternativ oder zusätzlich kann die Ausbringmengensteuereinrichtung dazu eingerichtet sein, die Anpassung der Ausbringmenge AM an Spritzflüssigkeit des Ausbringelements 22 durch eine Verstellung des Durchflussquerschnitts des Ausbringelements 22 umzusetzen, wobei die Verstellung des Durchflussquerschnitts beispielsweise über eine verstellbare Blende erfolgen kann.

Die Ausbringmenge AM an Spritzflüssigkeit des Ausbringelements 22 kann auf diese Weise an die Geschwindigkeit des Ausbringelements 22 angepasst werden, wobei die Geschwindigkeit des Ausbringelements 22 durch den Sensor 36 erfassen wird. Durch die Anpassung der Ausbringmenge AM an Spritzflüssigkeit können durch Gestängeschwingungen verursachte lokale Überdosierungen und Unterdosierungen der ausgebrachten Spritzflüssigkeit effektiv ausgeglichen werden.

### Bezugszeichenliste

- 10: Spritzeinrichtung
- 12: Verteilergestänge
- 14: Gestängeaufhängung
- 16a, 16b: Ausleger
- 18a-18g: Gestängesegmente
- 20a-20i: Gruppen von Ausbringelementen
- 22: Ausbringelemente
- 24: Schwingungsreduziereinrichtung
- 26: Ausbringmengensteuereinrichtung
- 28: Aufhängungsrahmen
- 32a, 32b: Gegenerreger
- 34: Erfassungseinrichtung
- 36: Sensoren
- 38: Zwischenrahmen

- 100: landwirtschaftliches Spritzgerät
- 102: Vorratstank
- 104a, 104b: Räder
- 106: Zugdeichsel

- 200: Zugmaschine

- B: Boden
- N: Nutzpflanzenbestand
- AM: Ausbringmenge
- MO-M4: Gesamtausbringmenge an Spritzflüssigkeit
- t: Zeit
- S: Schaltzustand
- FR: Fahrtrichtung

## Patentansprüche

1. Spritzeinrichtung (10) für ein landwirtschaftliches Spritzgerät (100), mit
- einem Verteilergestänge (12), an welchem mehrere Ausbringelemente (22) zum Ausbringen einer Spritzflüssigkeit angeordnet sind; und
- einer aktiven Schwingungsreduziereinrichtung (24), welche dazu eingerichtet ist, Schwingungen des Verteilergestänges (12) aktiv zu reduzieren;
**gekennzeichnet durch** eine Ausbringmengensteuereinrichtung (26), welche dazu eingerichtet ist, die Ausbringmenge (AM) an Spritzflüssigkeit an mehreren, gruppierten oder sämtlichen Ausbringelementen (22) unabhängig voneinander an Schwingungen des Verteilergestänges (12) anzupassen.

2. Spritzeinrichtung (10) nach Anspruch 1,
**dadurch gekennzeichnet, dass** die aktive Schwingungsreduziereinrichtung (24) dazu eingerichtet ist, elastische Schwingungen des Verteilergestänges (12) und/oder Starrkörperschwingungen des Verteilergestänges (12) aktiv zu reduzieren.

3. Spritzeinrichtung (10) nach Anspruch 1 oder 2,
**dadurch gekennzeichnet, dass** die aktive Schwingungsreduziereinrichtung (24) dazu eingerichtet ist, horizontale und/oder vertikale Gestängeschwingungen zu reduzieren.

4. Spritzeinrichtung (10) nach einem der vorstehenden Ansprüche,
**dadurch gekennzeichnet, dass** die aktive Schwingungsreduziereinrichtung (24) dazu eingerichtet ist,
- Schwingungen des Verteilergestänges (12) aktiv zu dämpfen;
- Schwingungen des Verteilergestänges (12) aktiv zu tilgen; und/oder
- das Verteilergestänge (12) aktiv von einem Erregerbauteil, welches das Verteilergestänge (12) zu Schwingungen anregt, zu entkoppeln.

5. Spritzeinrichtung (10) nach einem der vorstehenden Ansprüche,
**dadurch gekennzeichnet, dass** die aktive Schwingungsreduziereinrichtung (24) einen oder mehrere Gegenerreger (32a, 32b) aufweist, welche dazu eingerichtet sind, das Verteilergestänge (12) entgegen der Gestängeschwingungen zu erregen.

6. Spritzeinrichtung (10) nach einem der vorstehenden Ansprüche,
**dadurch gekennzeichnet, dass** die Ausbringmengensteuereinrichtung (26) dazu eingerichtet ist, die Anpassung der Ausbringmenge (AM) an Spritzflüssigkeit der einzelnen, gruppierten oder sämtlichen Ausbringelemente (22) durch eine Adaption des Durchflusses an Spritzflüssigkeit durch die einzelnen, gruppierten oder sämtlichen Ausbringelemente (22) umzusetzen.

7. Spritzeinrichtung (10) nach einem der vorstehenden Ansprüche,
**dadurch gekennzeichnet, dass** die Ausbringmengensteuereinrichtung (26) dazu eingerichtet ist, die Anpassung der Ausbringmenge (AM) an Spritzflüssigkeit der einzelnen, gruppierten oder sämtlichen Ausbringelemente (22) durch eine Verstellung des Durchflussquerschnitts der einzelnen, gruppierten oder sämtlichen Ausbringelemente (22) umzusetzen.

8. Spritzeinrichtung (10) nach einem der vorstehenden Ansprüche,
**dadurch gekennzeichnet, dass** die Ausbringmengensteuereinrichtung (26) dazu eingerichtet ist, die Anpassung der Ausbringmenge (AM) an Spritzflüssigkeit der einzelnen, gruppierten oder sämtlichen Ausbringelemente (22) durch ein Modulationsverfahren, insbesondere durch eine Pulsweitenfrequenzmodulation, an den einzelnen, gruppierten oder sämtlichen Ausbringelementen (22) umsetzen.

9. Spritzeinrichtung (10) nach einem der vorstehenden Ansprüche,
**gekennzeichnet durch** eine Erfassungseinrichtung (34), welche dazu eingerichtet ist, Schwingungen des Verteilergestänges (12) zu erfassen und/oder zu ermitteln.

10. Spritzeinrichtung (10) nach Anspruch 9,
**dadurch gekennzeichnet, dass** die Erfassungseinrichtung (34) dazu eingerichtet ist, der Schwingungsreduziereinrichtung (24) und/oder der Ausbringmengensteuereinrichtung (26) Informationen zu den erfassten Schwingungen des Verteilergestänges (12) zur Verfügung zu stellen.

11. Spritzeinrichtung (10) nach Anspruch 9 oder 10,
**dadurch gekennzeichnet, dass** die Erfassungseinrichtung (34) zum Ermitteln von Schwingungen des Verteilergestänges (12) dazu eingerichtet ist, einen Gestängeschwingungen verursachenden Zustand der Spritzeinrichtung (10) und/oder des landwirtschaftlichen Spritzgeräts (100) zu erfassen und/oder auszuwerten.

12. Spritzeinrichtung (10) nach einem der Ansprüche 9 bis 11,
**dadurch gekennzeichnet, dass** die Erfassungseinrichtung (34) zumindest zwei Sensoren (36) aufweist, welche beabstandet voneinander an dem Verteilergestänge (12) angeordnet und dazu geeignet sind, Gestängebewegungen zu erfassen und/oder zu ermitteln.

13. Spritzeinrichtung (10) nach einem der Ansprüche 9 bis 12,
wobei das Verteilergestänge (12) zwei laterale Ausleger (16a, 16b) umfasst, welche sich im Betrieb der Spritzeinrichtung (10) in entgegengesetzte Richtungen erstrecken,
**dadurch gekennzeichnet, dass** an jedem Ausleger (16a, 16b) des Verteilergestänges (12) mehrere Sensoren (36) angeordnet sind, welche beabstandet voneinander angeordnet und dazu geeignet sind, Gestängebewegungen zu erfassen und/oder zu ermitteln.

14. Spritzeinrichtung (10) nach einem der Ansprüche 9 bis 13,
**dadurch gekennzeichnet, dass** die Erfassungseinrichtung (34) eine Anzahl von Sensoren (36) aufweist, wobei die Anzahl und die Anordnung der Sensoren (36) an dem Verteilergestänge (12) die Ermittlung zumindest der horizontalen und durch Gestängeschwingungen verursachten Auslenkung und/oder Geschwindigkeit der an dem Verteilergestänge (12) angeordneten Ausbringelemente (22) erlauben.

15. Spritzeinrichtung (10) nach einem der Ansprüche 9 bis 14,
**dadurch gekennzeichnet, dass** die Erfassungseinrichtung (34) mehrere Sensoren (36) aufweist, welche dazu geeignet sind, Gestängebewegungen zu erfassen und/oder zu ermitteln, wobei im Bereich eines jeden Ausbringelements (22) oder an jedem Ausbringelement (22) ein Sensor (36) angeordnet ist.

16. Spritzeinrichtung (10) nach einem der Ansprüche 12 bis 15,
**dadurch gekennzeichnet, dass** die Sensoren (36) als Beschleunigungssensoren ausgebildet und dazu eingerichtet sind, die Gestängebeschleunigung und/oder die Beschleunigung der Ausbringelemente (22) zu erfassen.

17. Spritzeinrichtung (10) nach einem der Ansprüche 9 bis 16,
**dadurch gekennzeichnet, dass** die Erfassungseinrichtung (34) dazu eingerichtet ist, eine Kurvenfahrt zu erfassen, und die Ausbringmengensteuereinrichtung (26) dazu eingerichtet ist, die Ausbringmenge (AM) an Spritzflüssigkeit einzelner, gruppierter oder sämtlicher Ausbringelemente (22) der erfassten Kurven anzupassen.

18. Landwirtschaftliches Spritzgerät (100), insbesondere Feldspritze, mit
- einem Vorratstank (102) zur Bevorratung von Spritzflüssigkeit; und
- einer mit dem Vorratstank (102) verbundenen Spritzeinrichtung (10) zum Verspritzen der Spritzflüssigkeit;
**dadurch gekennzeichnet, dass** die Spritzeinrichtung (10) nach einem der vorstehenden Ansprüche ausgebildet ist.

## Claims

1. Spray device (10) for an agricultural sprayer (100), having
- a distributor boom (12) on which a plurality of dispensing elements (22) for dispensing a spray liquid are arranged; and
- an active vibration reducing device (24) which is set up to actively reduce vibrations of the distributor boom (12);
**characterized by** a dispensing-quantity control device (26) which is set up to adapt the dispensing quantity (AM) of spray liquid at a plurality of, groups of or all of the dispensing elements (22), independently of one another, to vibrations of the distributor boom (12).

2. Spray device (10) according to Claim 1, **characterized in that** the active vibration reducing device (24) is set up to actively reduce elastic vibrations of the distributor boom (12) and/or rigid-body vibrations of the distributor boom (12).

3. Spray device (10) according to Claim 1 or 2, **characterized in that** the active vibration reducing device (24) is set up to reduce horizontal and/or vertical boom vibrations.

4. Spray device (10) according to one of the preceding claims,
**characterized in that** the active vibration reducing device (24) is set up
- to actively damp vibrations of the distributor boom (12);
- to actively absorb vibrations of the distributor boom (12); and/or
- to decouple the distributor boom (12) actively from an exciter component that induces vibrations in the distributor boom (12).

5. Spray device (10) according to one of the preceding claims,
**characterized in that** the active vibration reducing device (24) has one or more counter-exciters (32a, 32b) which are set up to excite the distributor boom (12) counter to the boom vibrations.

6. Spray device (10) according to one of the preceding claims,
**characterized in that** the dispensing-quantity control device (26) is set up to implement the adaptation of the dispensing quantity (AM) of spray liquid of the individual, groups of or all of the dispensing elements (22) by adapting the throughflow of spray liquid through the individual, groups of or all of the dispensing elements (22).

7. Spray device (10) according to one of the preceding claims,
**characterized in that** the dispensing-quantity control device (26) is set up to implement the adaptation of the dispensing quantity (AM) of spray liquid of the individual, groups of or all of the dispensing elements (22) by adjusting the flow cross section of the individual, groups of or all of the dispensing elements (22).

8. Spray device (10) according to one of the preceding claims,
**characterized in that** the dispensing-quantity control device (26) is set up to implement the adaptation of the dispensing quantity (AM) of spray liquid of the individual, groups of or all of the dispensing elements (22) by way of a modulation process, in particular by way of pulse-width frequency modulation, at the individual, groups of or all of the dispensing elements (22).

9. Spray device (10) according to one of the preceding claims,
**characterized by** a detection device (34) which is set up to detect and/or ascertain vibrations of the distributor boom (12).

10. Spray device (10) according to Claim 9, **characterized in that** the detection device (34) is set up to provide information about the detected vibrations of the distributor boom (12) to the vibration reducing device (24) and/or to the dispensing-quantity control device (26).

11. Spray device (10) according to Claim 9 or 10, **characterized in that** the detection device (34) for ascertaining vibrations of the distributor boom (12) is set up to detect and/or evaluate a state of the spray device (10) and/or of the agricultural sprayer (100) that causes boom vibrations.

12. Spray device (10) according to one of Claims 9 to 11,
**characterized in that** the detection device (34) has at least two sensors (36) which are arranged in a spaced-apart manner on the distributor boom (12) and are suitable for detecting and/or ascertaining boom movements.

13. Spray device (10) according to one of Claims 9 to 12,
wherein the distributor boom (12) comprises two lateral boom arms (16a, 16b) which extend in opposite directions during operation of the spray device (10),
**characterized in that** a plurality of sensors (36) are arranged on each boom arm (16a, 16b) of the distributor boom (12), said sensors being arranged in a spaced-apart manner and being suitable for detecting and/or ascertaining boom movements.

14. Spray device (10) according to one of Claims 9 to 13,
**characterized in that** the detection device (34) has a number of sensors (36), wherein the number and the arrangement of the sensors (36) on the distributor boom (12) allow at least the horizontal deflection, caused by boom vibrations, and/or speed of the dispensing elements (22) arranged on the distributor boom (12) to be ascertained.

15. Spray device (10) according to one of Claims 9 to 14,
**characterized in that** the detection device (34) has a plurality of sensors (36) which are suitable for detecting and/or ascertaining boom movements, wherein a sensor (36) is arranged in the region of each dispensing element (22) or on each dispensing element (22).

16. Spray device (10) according to one of Claims 12 to 15,
**characterized in that** the sensors (36) are in the form of acceleration sensors and are set up to detect the boom acceleration and/or the acceleration of the dispensing elements (22).

17. Spray device (10) according to one of Claims 9 to 16,
**characterized in that** the detection device (34) is set up to detect negotiation of a curve, and the dispensing-quantity control device (26) is set up to adapt the dispensing quantity (AM) of spray liquid of individual, groups of or all of the dispensing elements (22) to the detected curves.

18. Agricultural sprayer (100), in particular field sprayer, having
- a storage tank (102) for storing spray liquid; and
- a spray device (10), connected to the storage tank (102), for spraying the spray liquid;
**characterized in that** the spray device (10) is configured according to one of the preceding claims.

## Revendications

1. Dispositif de pulvérisation (10) destiné à un pulvérisateur agricole (100), ledit dispositif de pulvérisation comprenant
- un ensemble de tiges de distribution (12) au niveau duquel sont disposés une pluralité d'éléments d'épandage (22) destinés à l'épandage d'un liquide de pulvérisation ; et
- un dispositif de réduction active de vibrations (24) qui est conçu pour réduire activement les vibrations de l'ensemble de tiges de distribution (12) ;
**caractérisé par** un dispositif de commande de débit d'épandage (26) qui est conçu pour adapter le débit d'épandage (AM) du liquide de pulvérisation, au niveau d'une pluralité d'éléments d'épandage (22) groupés ou de tous les éléments d'épandage (22), indépendamment les uns des autres, aux vibrations de l'ensemble de tiges de distribution (12).

2. Dispositif de pulvérisation (10) selon la revendication 1,
**caractérisé en ce que** le dispositif de réduction active de vibrations (24) est conçu pour réduire activement les vibrations élastiques de l'ensemble de tiges de distribution (12) et/ou les vibrations de corps rigide de l'ensemble de tiges de distribution (12).

3. Dispositif de pulvérisation (10) selon la revendication 1 ou 2,
**caractérisé en ce que** le dispositif de réduction active de vibrations (24) est conçu pour réduire les vibrations horizontales et/ou verticales de l'ensemble de tiges.

4. Dispositif de pulvérisation (10) selon l'une des revendications précédentes,
**caractérisé en ce que** le dispositif de réduction active de vibrations (24) est conçu pour
- amortir activement les vibrations de l'ensemble de tiges de distribution (12) ;
- éliminer activement les vibrations de l'ensemble de tiges de distribution (12) ; et/ou
- découpler activement l'ensemble de tiges de distribution (12) d'un composant excitateur qui excite l'ensemble de tiges de distribution (12) pour le faire vibrer.

5. Dispositif de pulvérisation (10) selon l'une des revendications précédentes,
**caractérisé en ce que** le dispositif de réduction active de vibrations (24) comporte un ou plusieurs excitateurs antagonistes (32a, 32b) qui sont conçus pour exciter l'ensemble de tiges de distribution (12) de manière à s'opposer aux vibrations de l'ensemble de tiges.

6. Dispositif de pulvérisation (10) selon l'une des revendications précédentes,
**caractérisé en ce que** le dispositif de commande du débit d'épandage (26) est conçu pour adapter le débit d'épandage (AM) du liquide de pulvérisation des éléments d'épandage (22) individuels ou groupés ou de tous les éléments d'épandage (22) en adaptant l'écoulement du liquide de pulvérisation à travers les éléments d'épandage (22) individuels ou groupés ou tous les éléments d'épandage (22).

7. Dispositif de pulvérisation (10) selon l'une des revendications précédentes,
**caractérisé en ce que** le dispositif de commande de débit d'épandage (26) est conçu pour adapter le débit d'épandage (AM) du liquide de pulvérisation des éléments d'épandage (22) individuels ou groupés ou de tous les éléments d'épandage (22) en ajustant la section d'écoulement des éléments d'épandage (22) individuels ou groupés ou de tous les éléments d'épandage (22) .

8. Dispositif de pulvérisation (10) selon l'une des revendications précédentes, **caractérisé en ce que** le dispositif de commande de débit d'épandage (26) est conçu pour adapter le débit d'épandage (AM) du liquide de pulvérisation des éléments d'épandage (22) individuels ou groupés ou de tous les éléments d'épandage (22) par un procédé de modulation, notamment par une modulation de fréquence d'impulsions en largeur au niveau des éléments d'épandage (22) individuels ou groupés ou de tous les éléments d'épandage (22).

9. Dispositif de pulvérisation (10) selon l'une des revendications précédentes,
**caractérisé par** un dispositif de détection (34) qui est conçu pour détecter et/ou déterminer les vibrations de l'ensemble de tiges de distribution (12).

10. Pulvérisateur (10) selon la revendication 9, **caractérisé en ce que** le dispositif de détection (34) est conçu pour fournir au dispositif de réduction de vibrations (24) et/ou au dispositif de commande de débit d'épandage (26) des informations sur les vibrations détectées de l'ensemble de tiges de distribution (12).

11. Dispositif de pulvérisation (10) selon la revendication 9 ou 10,
**caractérisé en ce que** le dispositif de détection (34) destiné déterminer les vibrations de l'ensemble de tiges de distribution (12) est conçu pour détecter et/ou évaluer un état du dispositif de pulvérisation (10) et/ou du pulvérisateur agricole (100) à l'origine des vibrations de l'ensemble de tiges.

12. Dispositif de pulvérisation (10) selon l'une des revendications 9 à 11,
**caractérisé en ce que** le dispositif de détection (34) comporte au moins deux capteurs (36) qui sont disposés à distance l'un de l'autre sur l'ensemble de tiges de distribution (12) et qui sont adaptés pour détecter et/ou déterminer des mouvements de l'ensemble de tiges.

13. Dispositif de pulvérisation (10) selon l'une des revendications 9 à 12,
l'ensemble de tiges de distribution (12) comprenant deux flèches latérales (16a, 16b) qui s'étendent dans des directions opposées lorsque le dispositif de pulvérisation (10) est en fonctionnement,
**caractérisé en ce qu'**une pluralité de capteurs (36) sont disposés sur chaque flèche (16a, 16b) de l'ensemble de tiges de distribution (12), lesquels capteurs (36) sont disposés à distance les uns des autres et sont adaptés pour détecter et/ou déterminer des mouvements de l'ensemble de tiges.

14. Dispositif de pulvérisation (10) selon l'une des revendications 9 à 13,
**caractérisé en ce que** le dispositif de détection (34) comporte un certain nombre de capteurs (36), le nombre et la disposition des capteurs (36) sur l'ensemble de tiges de distribution (12) permettant la détermination au moins de la déviation horizontale et/ou de la vitesse des éléments d'épandage (22) disposés sur l'ensemble de tiges de distribution (12) dues aux vibrations de l'ensemble de tiges.

15. Dispositif de pulvérisation (10) selon l'une des revendications 9 à 14,
**caractérisé en ce que** le dispositif de détection (34) comporte une pluralité de capteurs (36) qui sont adaptés pour détecter et/ou déterminer les mouvements de l'ensemble de tiges, un capteur (36) étant disposé dans la zone de chaque élément d'épandage (22) ou au niveau de chaque élément d'épandage (22).

16. Dispositif de pulvérisation (10) selon l'une des revendications 12 à 15,
**caractérisé en ce que** les capteurs (36) sont conformés en capteurs d'accélération et sont conçus pour détecter l'accélération de l'ensemble de tige et/ou l'accélération des éléments d'épandage (22).

17. Dispositif de pulvérisation (10) selon l'une des revendications 9 à 16,
**caractérisé en ce que** le dispositif de détection (34) est conçu pour détecter un virage, et le dispositif de commande de débit d'épandage (26) est conçu pour adapter le débit d'épandage (AM) du liquide de pulvérisation des éléments d'épandage (22) individuels ou groupés ou de tous les éléments d'épandage (22) aux virages détectés.

18. Pulvérisateur agricole (100), en particulier pulvérisateur à cultures, comprenant
- un réservoir de stockage (102) destiné à stocker le liquide de pulvérisation ; et
- un dispositif de pulvérisation (10) relié au réservoir de stockage (102) et destiné à pulvériser le liquide de pulvérisation ;
**caractérisé en ce que** le dispositif de pulvérisation (10) est conçu selon l'une des revendications précédentes.
